# EUROPÄISCHE PATENTSCHRIFT

(11) **EP 2 003 346 B1**
(45) Veröffentlichungstag und Bekanntmachung des Hinweises auf die Patenterteilung: **29.02.2012**
(21) Anmeldenummer: 08009502.9
(22) Anmeldetag: 23.05.2008
(51) Int. Cl.: F16B 5/02

(54) **Befestigungseinrichtung mit Toleranzausgleich**
Fixing device with tolerance compensation
Dispositif de fixation doté d'une égalisation de tolérance

(30) Priorität: 11.06.2007 DE 202007008152 U
(43) Veröffentlichungstag der Anmeldung: 17.12.2008
(73) Patentinhaber: Böllhoff Verbindungstechnik GmbH, 33649 Bielefeld (DE)
(72) Erfinder: Figge, Hans-Ulrich, 33758 Schloß-Holte (DE); Burger, Ingo, 33758 Schloß-Holte (DE)
(74) Vertreter: Heyer, Volker

(56) Entgegenhaltungen:
- EP-A1- 1 780 424
- EP-A2- 1 744 063
- DE-U1-202005 016 823
- FR-A2- 2 135 463

## Beschreibung

Die vorliegende Erfindung betrifft eine Befestigungseinrichtung zum Befestigen eines Bauteils B an einem Bauteil A mit selbsttätigem Ausgleich von Toleranzen im Abstand zwischen den beiden Bauteilen.

Derartige Befestigungseinrichtungen mit Toleranzausgleich sind in großer Vielfalt bekannt. Sie bestehen üblicherweise aus einer Verstellbuchse mit einem sogenannten Mitschleppabschnitt, der mit einer Befestigungsschraube eine Reibschlussverbindung eingehen kann. Beim Drehen der Befestigungsschraube wird daher die Verstellbuchse mitgedreht, bis sie sich an eines der beiden Bauteile anlegt, worauf dann beim Weiterdrehen der Befestigungsschraube und entsprechende Erhöhung des Drehmomentes die Reibschlussverbindung überwunden wird, so dass dann die beiden Bauteile durch die Befestigungsschraube über die Verstellbuchse miteinander verspannt werden können.

Aus der europäischen Patentanmeldung EP 1 780 424 ist eine derartige Toleranzausgleichsanordnung bekannt. Diese Anordnung umfasst ein einstückig ausgebildetes Aufnahmeelement und ein einstückig ausgebildetes Verstellelement. Das Aufnahmeelement hat einen Befestigungsabschnitt mit einem selbstfurchenden und/oder -formenden Gewinde, das zum Herstellen einer Schraubverbindung in das eine Bauteil einschraubbar ist, wobei die Schraubverbindung eine Kunststoff-in-Kunststoff-Schraubverbindung ist.

Der vorliegenden Erfindung liegt die Aufgabe zugrunde, eine Befestigungseinrichtung mit selbsttätigem Toleranzausgleich der angegebenen Gattung so weiterzubilden, dass die Montage und Demontage der Befestigungseinrichtung vereinfacht werden.

Die Befestigungseinrichtung gemäß der vorliegenden Erfindung ist in Anspruch 1 definiert. Sie dient dem Befestigen eines Bauteils B an einem Bauteil A mit selbsttätigem Ausgleich von Toleranzen im Abstand zwischen dem Bauteil B und dem Bauteil A. Die erfindungsgemäße Befestigungseinrichtung besteht aus einem Aufnahmeelement und einem Verstellelement, das über eine erste Gewindepaarung einer ersten Gangrichtung mit dem Aufnahmeelement verschraubbar ist, und einer Befestigungsschraube, die über eine zweite Gewindepaarung einer entgegengesetzten zweiten Gangrichtung in das Aufnahmeelement einschraubbar und mit dem Verstellelement durch eine lösbare Mitschleppverbindung verbindbar ist, um beim Drehen der Befestigungsschraube das Verstellelement mitzudrehen und dadurch zwecks Toleranzausgleich in Anlage mit dem Bauteil B zu bewegen, während das Aufnahmeelement unterhalb eines Flansches mindestens einen radial vorstehenden Haltevorsprung aufweist, so dass das Aufnahmeelement durch form- und/oder kraftschlüssiges Halten des Bauteils A zwischen dem Flansch und dem mindestens einen Haltevorsprung am Bauteil A festlegbar ist. Vorzugweise ist eine Mehrzahl von Haltevorsprüngen umfänglich am Aufnahmeelement angeordnet. Somit gibt die äußere Form des Aufnahmeelements mit Haltevorsprüngen eine gewisse Silhouette vor, die in ein komplementär dazu geformtes Schlüsselloch im Bauteil A einsetzbar ist. Nach Drehen des Aufnahmeelements um seine Längsachse wird das Bauteil A zwischen dem Flansch und den Haltevorsprüngen des Aufnahmeelements gehalten. Dieses Halten basiert auf einer form- und/oder kraftschlüssigen Verbindung. Ergänzt wird die Konstruktion und Funktionalität des Aufnahmeelements durch mindestens ein Federelement, das angrenzend an den Flansch des Aufnahmeelements angeordnet ist. Dieses Federelement unterstützt einerseits die Befestigung des Bauteils A zwischen Flansch und Haltevorsprung und andererseits dient es bevorzugt dem Verriegeln des Aufnahmeelements im Schlüsselloch des Bauteils A.

Weitere vorteilhafte Ausgestaltungen der Erfindung gehen aus den Unteransprüchen hervor.

Anhand der Zeichnungen wird ein Ausführungsbeispiel der Erfindung näher erläutert. Es zeigt:
Fig. 1 eine Seitenansicht eines Verstellelementes;
Fig. 2 eine Draufsicht auf das Verstellelement in Fig. 1;
Fig. 3 eine perspektivische Ansicht des Verstellelementes in den Figuren 1 und 2;
Fig. 4 eine Seitenansicht eines Aufnahmeelementes;
Fig. 5 eine Draufsicht auf das Aufnahmeelement in Fig. 4;
Fig. 6 eine perspektivische Ansicht des Aufnahmeelementes in den Figuren 4 und 5;
Fig. 7A bis D perspektivische Ansichten verschiedener Stadien bei der Montage des Aufnahmeelements im Bauteil A;
Fig. 8 eine Ausschnittsvergrößerung des Aufnahmeelements;
Fig. 9 eine Schnittansicht der Baueinheit E und des Bauteils A nach der Montage gemäß Fig. 7;
Fig. 10 eine Schnittansicht einer erfindungsgemäß ausgebildeten Befestigungseinrichtung im fertig montierten Zustand; und
Fig. 11 bis 14 perspektivische Ansichten der in Fig. 10 gezeigten Befestigungseinrichtung in unterschiedlichen Montagezuständen.

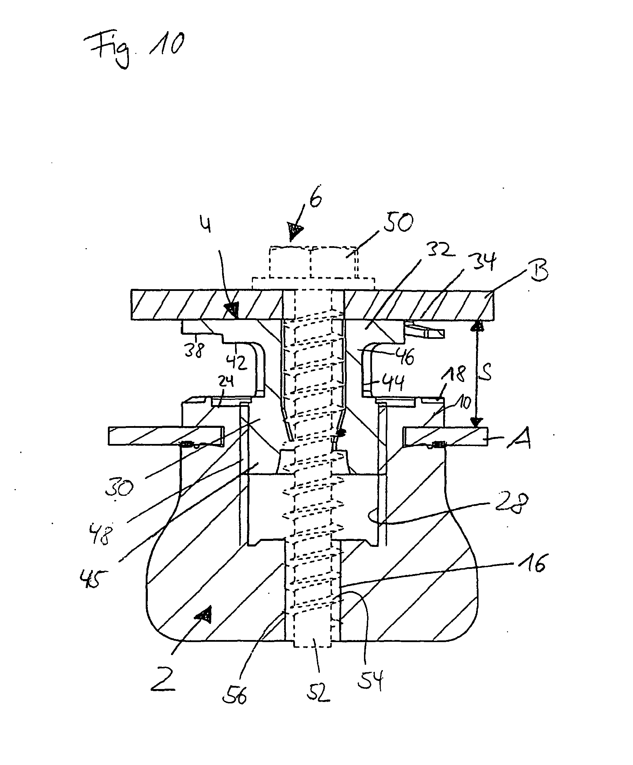

Die in Fig. 10 dargestellte Befestigungseinrichtung dient zum Befestigen eines Bauteils B an einem Bauteil A. Das Bauteil A ist beispielsweise ein Träger eines Kraftfahrzeuges, während das Bauteil B ein durch Lehren fixiertes Teil eines Scheinwerfergehäuses ist. Das Bauteil A und das Bauteil B haben einen Abstand S voneinander, der aufgrund von montage- und/oder fertigungsbedingten Toleranzen variieren kann. Die dargestellte Befestigungseinrichtung ermöglicht einen selbsttätigen Ausgleich dieser Toleranzen. Da das Scheinwerfergehäuse auch an anderen Stellen (nicht gezeigt) geführt werden kann, ist an dieser Stelle keine kraftschlüssige Verbindung zwischen den Bauteilen A und B erforderlich; d.h., dass im fertig montierten Zustand eine seitliche Verschiebung der Bauteile A und B unter Überwindung einer entsprechenden Reibung ggf. noch möglich ist.

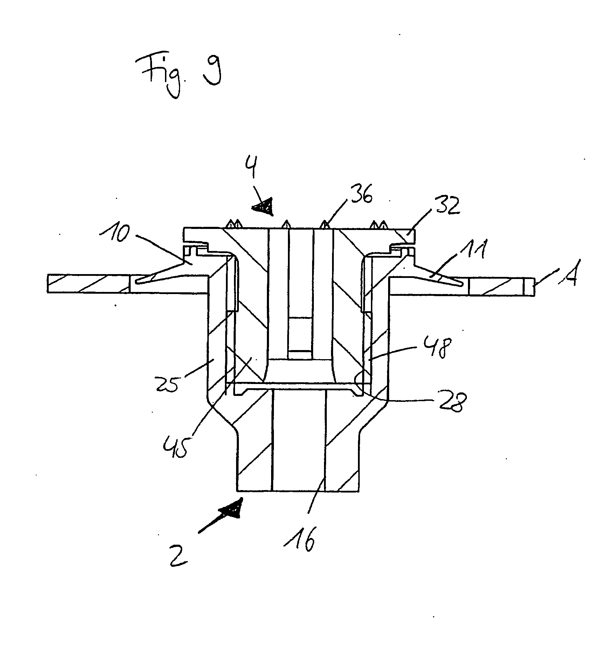

Die Befestigungseinrichtung besteht aus einem Aufnahmeelement 2, einem Verstellelement 4 und einer Befestigungsschraube 6. Das Aufnahmeelement 2 und das Verstellelement 4 bilden eine vormontierbare Baueinheit E (s. Fig. 9), wie noch genauer erläutert wird.

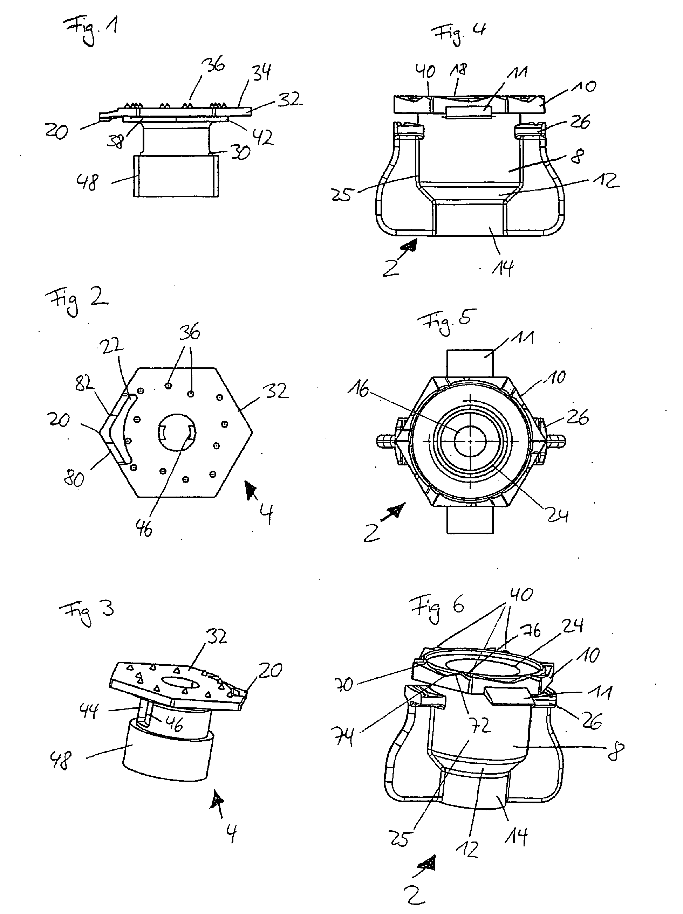

Es wird nun zusätzlich zu Fig. 10 auf die Figuren 4 bis 6 Bezug genommen, in denen das Aufnahmeelement 2 im Einzelnen dargestellt ist. Das einstückig ausgebildete Aufnahmeelement 2 besteht aus einem hülsenförmigen Körper 8, der an seinem einen axialen Ende in einen Flansch 10 und an seinem anderen axialen Ende in einen konischförmig ausgebildeten Einführabschnitt 12 übergeht. An dem Einführabschnitt 12 ist ein axial einwärts verlaufender, hülsenförmiger Ansatz 14 angeformt, der mit einer glattwandigen Bohrung 16 versehen ist.

Der Flansch 10 hat eine in einer Radialebene liegende Stirnfläche 18, in der gemäß einer Ausführungsform (nicht gezeigt) ein einzelner axial verlaufender Rastvorsprung gebildet ist. Der Rastvorsprung ist innerhalb einer Ausnehmung angeordnet, wobei er von einem unteren Bereich des Flansches 10 axial nach oben verläuft und um einen vorgegebenen Betrag über die zugehörige Stirnfläche 18 des Flansches 10 vorsteht. Der Zweck des Rastvorsprunges wird noch genauer erläutert. In der Stirnfläche 18 des Flansches 10 ist ferner eine ringförmige Ausnehmung 24 gebildet (vgl. Fig. 5).

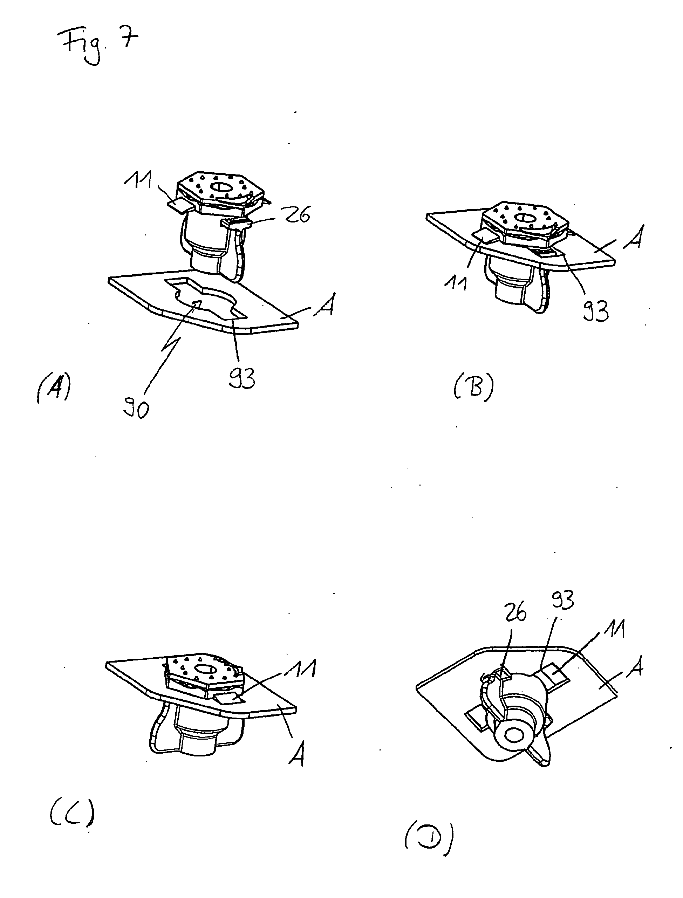

Der hülsenförmige Körper 8 des Aufnahmeelementes 2 besteht in dem Bereich zwischen dem Flansch 10 und dem Einführabschnitt 12 aus einer hülsenförmigen Wand 25. Der Flansch 10 des Aufnahmeelements 2 befindet sich in einer ersten Radialebene rechtwinklig zur Längsachse des Aufnahmeelements 2. In einer zweiten Radialebene beabstandet zur ersten Radialebene ist mindestens ein radial vorstehender Haltevorsprung 26 angeordnet. Gemäß der in den Figuren 4 und 6 gezeigten Ausführungsform sind in der zweiten Radialebene gegenüberliegend zwei radial vorstehende Haltevorsprünge 26 vorgesehen. Es ist ebenfalls denkbar, mehr als zwei Haltevorsprünge 26 an einem Aufnahmeelement 2 zu nutzen. Zur Verstärkung des Haltevorsprungs 26 sind vorzugsweise in axialer Richtung verlaufende Verstärkungsrippen vorgesehen (vgl. Fig. 4, 7).

Der Haltevorsprung 26 ist ähnlich einem Dreieck geformt. Eine Seite des Dreiecks ist annähernd parallel zur Unterseite des Flansches 10 angeordnet. Eine weitere Seite des Dreiecks liegt an der hülsenförmigen Wand 25 des Aufnahmeelements 2 an. Die erste und zweite Radialebene des Aufnahmeelements 2 sind derart beabstandet, dass zwischen Unterseite des Flansches 10 und Haltevorsprung 26 das Bauteil A aufnehmbar ist. Es ist bevorzugt, die Unterseite des Flansches 10 und die parallel zur Unterseite des Flansches 10 verlaufende Seite des Haltevorsprungs 26 um annähernd die Dicke des Bauteils A voneinander zu beabstanden. Die Vorteile dieser Konstruktion gehen aus der Beschreibung der Fig. 7 (s. u.) hervor. Durch Aufnahme des Bauteils A zwischen Flansch 10 und mindestens einem Haltevorsprung 26 wird somit das Aufnahmeelement 2 kraftschlüssig und/oder formschlüssig am Bauteil A gehalten.

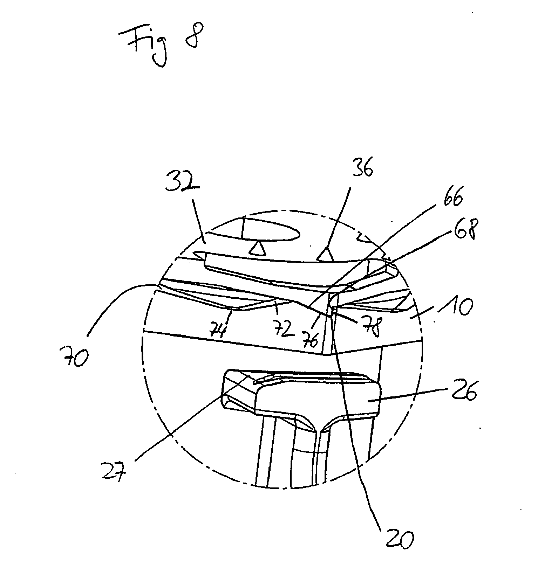

Zur weiteren Unterstützung der Verbindung zwischen Bauteil A und Aufnahmeelement 2 umfasst der Haltevorsprung 26 bevorzugt eine Einführschräge 27. Diese Konstruktion ist vergrößert in Fig. 8 dargestellt. Die Seite des Haltevorsprungs 26 gegenüber dem Flansch 10 ist parallel zu diesem ausgebildet. Die Einführschräge 27 grenzt an diese parallele Seite an und bildet eine schiefe Ebene, die von der Unterseite des Flansches 10 weg geneigt ist. Durch diese Geometrie wird das Einführen des Bauteils A zwischen Haltevorsprung 26 und Flansch 10 des Aufnahmeelements 2 erleichtert und unterstützt.

Sollte das Bauteil A dicker als der Abstand zwischen der Unterseite des Flansches 10 und der dazu parallelen Seite des Haltevorsprungs 26 ausgebildet sein, ermöglicht die Einführschräge 27 ein Einführen des Bauteils A bis zu einem bestimmten Punkt. Da der Haltevorsprung 26 aus Kunststoff besteht, schert das Bauteil A ab diesem bestimmten Punkt die behindernde Höhe des Haltevorsprungs 26 ab, während das Bauteil A weiter in den Zwischenraum zwischen Haltevorsprung 26 und Flansch 10 geschoben wird. Auf diese Weise wird eine optimale Abstimmung des Abstands zwischen Flansch 10 und Haltevorsprung 26 auf die Dicke des Bauteils A erzielt. Diese Abstimmung gewährleistet eine spielfreie Befestigung des Bauteils A am Aufnahmeelement 2.

Gemäß einer weiteren bevorzugten Ausgestaltung umfasst das Aufnahmeelement 2 mindestens ein Federelement 11 (vgl. Figuren 4, 5, 6 und 7). Vorzugsweise ist das Federelement 11 angrenzend an den Flansch 10 angeordnet, während es aus dessen Radialebene heraus in Richtung der Längsachse des Aufnahmeelements 2 zum Haltevorsprung 26 hin geneigt ist. Wird das Bauteil A zwischen Flansch 10 und Haltevorsprung 26 eingesetzt, wird somit das Federelement 11 durch die Oberfläche des Bauteils A in die Radialebene des Flansches 10 gebogen. Durch die Federkraft des Federelements 11 wird somit das Bauteil A gegen den Haltevorsprung 26 gedrückt, was einen Toleranzausgleich bezogen auf die Dicke des Bauteils A und den Abstand zwischen Flansch 10 und Haltevorsprung 26 unterstützt.

In der Ausführungsform der Fig. 4 sind gegenüberliegend zwei Federelemente 11 angeordnet. Es ist ebenfalls denkbar, eine Vielzahl von Federelementen 11 anzuordnen, die umfänglich am Flansch 10 verteilt sind. Weist das Bauteil A im eingebauten Zustand Öffnungen oder Vertiefungen 93 nahe des Flansches 10 auf (vgl. Fig. 7), schnappt mindestens ein Federelement 11 in eine derartige Öffnung 93 ein. Auf diese Weise wird eine Verriegelung gegen das weitere Drehen des Aufnahmeelements 2 um seine Längsachse erzielt. Es ist ebenfalls bevorzugt, dass mindestens ein Federelement 11 als Verriegelungselement wirkt, während mindestens ein weiteres Federelement 11 das Bauteil A federvorspannt in Richtung des Haltevorsprungs 26.

Wird das Aufnahmeelement 2 nach dem Befestigen am Bauteil A um seine Längsachse gedreht, verhindert das verriegelnde Federelement 11 diese Drehung. Erst wenn ein Mindestdrehmoment auf das Aufnahmeelement 2 wirkt, wird das Federelement 11 in der Öffnung 93 vom Aufnahmeelement 2 entfernt, vorzugsweise abgeschert. Danach ist das Aufnahmeelement 2 vom Bauteil A entfernbar.

Das Aufnahmeelement 2 ist ferner mit einem Innengewinde 28 versehen, das sich über die Innenseiten der hülsenförmigen Wand 25 und des Flansches 10 erstreckt.

Zusätzlich zu Fig. 10 wird nun auf die Figuren 1 bis 3 Bezug genommen, die das Verstellelement 4 im Einzelnen zeigen. Das Verstellelement 4 besteht aus einem hülsenförmigen Körper 30, der an seinem oberen Ende in einen Flansch 32 übergeht. Der Flansch 32 hat an seiner Oberseite eine Stirnfläche 34, an der kleine, axial nach oben ragende Spitzen 36 (s. Fig. 1 bis 3) angeformt sind.

Der Flansch 32 ist auf der von der Stirnfläche 34 abgewandten Seite mit einer Stirnfläche 38 versehen, in der gemäß einer nicht gezeigten Ausführungsform mehrere über den Umfang verteilte Rastvertiefungen gebildet sind. Die Rastvertiefungen wirken mit dem oben erwähnten, nicht gezeigten Rastvorsprung des Aufnahmeelementes 2 in der Weise zusammen, dass sie eine lösbare Rastverbindung bilden können, die dafür sorgt, dass das Aufnahmeelement 2 und das Verstellelement 4 in vorgegebenen Winkelpositionen zueinander fluchten, wie noch genauer erläutert wird.

Wie insbesondere in den Fig. 2 und 5 zu sehen ist, haben das Aufnahmeelement 2 und das Verstellelement 4 im Bereich ihrer Flansche 10 und 32 unrunde Umfangskonturen, die im dargestellten Ausführungsbeispiel jeweils als Sechskant ausgebildet sind, jedoch auch andere Formen haben können. Wenn diese miteinander fluchten, kann ein gemeinsamer Schraubschlüssel (nicht gezeigt) an den Flanschen 10 und 32 angesetzt werden, um das Aufnahmeelement 2 und das Verstellelement 4 gemeinsam zu drehen.

An der Unterseite des Flansches 32 ist ein ringförmiger Ansatz 42 vorgesehen, der in die ringförmige Ausnehmung 24 des Flansches 10 des Aufnahmeelementes 2 eintauchen kann. Der hülsenförmige Körper 30 des Verstellelementes 4 ist in einem Bereich unterhalb des Flansches 32 mit zwei diametral gegenüberliegenden Fenstern 44 versehen, in denen zwei elastisch angeformte Mitschlepparme 46 angeordnet sind, s. insbesondere Fig. 3 und 10. Die Mitschlepparme 46 sind am inneren Umfang des Flansches 32 angeformt, verlaufen von dort axial nach unten und stehen radial so weit nach innen vor, dass sie eine Mitschleppverbindung mit der Schraube 6 bilden können, wie ebenfalls noch genauer erläutert wird.

Der hülsenförmige Körper 30 des Verstellelementes 4 hat in seinem unteren Bereich einen schürzenförmigen Ansatz 45, der an seinem Umfang mit einem Außengewinde 48 versehen ist (Fig. 9).

Die Schraube 6 ist beispielsweise eine herkömmliche Stahlschraube mit einem Kopf 50, einem Gewindeschaft 52 und einem selbstschneidenden und/oder - furchenden Gewinde 54, das beim Einschrauben in die glattwandige Bohrung 16 des Aufnahmeelementes 2 ein Gegengewinde 56 formt.

Die Bauteile A und B bestehen vorzugsweise aus Kunststoff. Das Bauteil A besteht beispielsweise aus einem glasfaserverstärkten PP, während das Bauteil B aus einem weicheren Kunststoff, beispielsweise einem PP mit Talkum besteht. Es ist ebenfalls bevorzugt, das Bauteil A aus Metall oder anderen Werkstoffen herzustellen. Wie man in Fig. 7A erkennen kann, umfasst das Bauteil A ein Schlüsselloch 90, in dem das Aufnahmeelement 2 aufnehmbar und befestigbar ist. Das Schlüsselloch 90 ist annähernd komplementär zur Silhouette des Aufnahmeelements 2 innerhalb der zweiten Radialebene ausgebildet. In der zweiten Radialebene liegen beispielsweise zwei Haltevorsprünge 26, während die verbleibende Form des Aufnahmeelements 2 durch die Wand 25 vorgegeben ist. Ist eine andere Anzahl von Haltevorsprüngen 26 vorgesehen, ist die Form des Schlüsselloch 90 entsprechend angepasst, um ein Einsetzen des Aufnahmeelements 2 in das Schlüsselloch 90 zu gewährleisten. Der innere Durchmesser des Schlüssellochs 90 ist zudem kleiner als der Außendurchmesser des Flansches 10, damit das Aufnahmeelement 2 formschlüssig im Bauteil A gehalten werden kann.

Nach dem Einsetzen des Aufnahmeelements 2 in das Schlüsselloch 90 in passender Ausrichtung, sind das Federelement 11 und der Flansch 10 oberhalb des Bauteils A und der Haltevorsprung 26 unterhalb des Bauteils A angeordnet. Wird das Aufnahmeelement 2 in Richtung des Bauteils A gedrückt und nachfolgend um seine Längsachse gedreht, werden die Haltevorsprünge 26 von den Öffnungen 93 zum Einsetzen weg bewegt. Aufgrund dieser Drehung entsteht eine formschlüssige Verbindung zwischen dem Bauteil A und dem Aufnahmeelement 2.

Wie in Fig. 7A zu erkennen ist, sind das Federelement 11 und der Haltevorsprung 26 umfänglich um 90° versetzt zueinander angeordnet. Andere winklige Anordnungen sind ebenfalls denkbar, die in Abstimmung mit dem Bauteil A realisierbar sind. Nach dem Einsetzen des Aufnahmeelements 2 in das Schlüsselloch 90, wobei die Haltevorsprünge 26 in Ausrichtung mit der Öffnung 93 sind, wie es in Fig. 7B gezeigt ist, wird das Aufnahmeelement 2 um seine Längsachse gedreht. Vorzugsweise wird das Aufnahmeelement 2 um einen Winkel von 90° um seine Längsachse gedreht, so dass die durch die Oberfläche des Bauteils A vorgespannten Federelemente 11 in die Öffnung 93 einschnappen. Es ist ebenfalls möglich, Vertiefungen oder Verriegelungsöffnungen auf/in der Oberfläche des Bauteils A vorzusehen, die nicht mit den Einsetzöffnungen 93 der Haltevorsprünge 26 identisch sind. Diese Vertiefungen oder Verriegelungsöffnungen (nicht gezeigt) dienen dann lediglich dem Verriegeln/Einschnappen der Federelemente 11 und nicht dem Einsetzen der Haltevorsprünge 26.

Die Federelemente 11 im verriegelten Zustand sind in Fig. 7C von oben und in Fig. 7D von unten gezeigt. Das Bauteil A ist in diesem Zustand zwischen Flansch 10 und dem Haltevorsprung 26 eingeklemmt, so dass eine form- und kraftschlüssige Verbindung zwischen dem Bauteil A und dem Aufnahmeelement 2 vorliegt.

Zum Entfernen des Aufnahmeelements 2 aus dem Bauteil A müsste man das Aufnahmeelement 2 gegen die verriegelnde Kraft des Federelements 11 um seine Längsachse drehen. Dieses Drehen entfernt das Federelement 11 vom Aufnahmeelement 2, wobei es vorzugsweise abgeschert wird. Bringt man nachfolgend die Haltevorsprünge 26 in Ausrichtung mit den Einsetzöffnungen 93, ist das Aufnahmeelement 2 aus dem Bauteil A entfernbar. Danach ist ein neues Aufnahmeelement 2 in das Schüsselloch 90 einsetzbar.

In Zusammenfassung der obigen Beschreibung ist somit das Einsetzen und Befestigen des Aufnahmeelements im Bauteil A mit folgenden Schritten beschreibbar: a) Ausrichten von Schlüsselloch 90 und Aufnahmeelement 2 zueinander, b) Einsetzen des Aufnahmeelements 2 in das Schlüsselloch 90, c) Drehen des Aufnahmeelements 2 um seine Längsachse, so dass das Bauteil A zwischen Flansch 10 und Haltevorsprung 26 gehalten wird. In gleicher Weise kann das Entfernen des Aufnahmeelements 2 mit folgenden Schritten zusammengefasst werden: a) Drehen des Aufnahmeelements 2 um seine Längsachse, wodurch verriegelnde Federelemente 11 entfernt werden, b) Ausrichten des Aufnahmeelements 2 zum Schlüsselloch 90 und c) Entfernen des Aufnahmeelements 2 aus dem Schlüsselloch 90.

Das Aufnahmeelement 2 und das Verstellelement 4 bestehen aus Kunststoff, wobei der Kunststoff des Aufnahmeelementes 2 zweckmäßigerweise härter als der Kunststoff des Verstellelementes 4 ist. Beispielsweise besteht das Aufnahmeelement 2 aus einem faserverstärkten PPA, z.B. mit einem Glasfaseranteil von 50%. Das Verstellelement 4 besteht beispielsweise aus einem faserverstärkten PA, z.B. mit einem Glasfaseranteil von 30%.

Im Folgenden werden die Montage und Funktionsweise der Befestigungseinrichtung erläutert:

Zunächst werden das Aufnahmeelement 2 und das Verstellelement 4 über das Innengewinde 28 und das Außengewinde 48 miteinander verschraubt, um die vormontierte Baueinheit E zu bilden, s. Fig. 9. Beim Einschrauben des Verstellelementes 4 in das Aufnahmeelement 2 rastet der Rastvorsprung 20 in eine der sechs Rastvertiefungen 40 ein (vgl. Fig. 6 und 8), kurz bevor die Stirnflächen 18 und 38 der Flansche 10 und 32 des Aufnahmeelementes 2 und Verstellelementes 4 in Anlage miteinander gelangen. In der Raststellung beträgt der maximale Abstand zwischen den Stirnflächen 18 und 38 ein Sechstel der Gewindesteigung der Gewindeverbindung 28, 48; er ist somit gleich der Gewindesteigung, geteilt durch die Anzahl der Rastvertiefungen.

Der Rastvorsprung 20 und die entsprechende Rastvertiefung 40 bilden somit eine lösbare Rastverbindung, durch die das Aufnahmeelement 2 und das Verstellelement 4 in einer von sechs vorgegebenen Winkelpositionen lösbar gehalten werden. In diesen Winkelpositionen sind das Aufnahmeelement 2 und das Verstellelement 4 so zueinander ausgerichtet, dass ihre unrunden Umfangskonturen (Sechskant) zueinander fluchten.

Die Rastverbindung 20, 40 zwischen dem Aufnahmeelement 2 und dem Verstellelement 4 erfüllt zwei Funktionen. Zum einen dient sie als Transportsicherung, so dass das Aufnahmeelement 2 und das Verstellelement 4 als Baueinheit E gehandhabt werden können. Zum anderen sichert die Rastverbindung das Aufnahmeelement 2 und das Verstellelement 4 in einer der sechs vorgegebenen Winkelpositionen, in der die Baueinheit E vorzugsweise durch einen gemeinsamen Schraubschlüssel (Sechskantnuss, nicht gezeigt) in das Schlüsselloch 90 des Bauteils A eingesetzt werden kann, s. Fig. 7.

Es kann nun das Bauteil B beispielsweise des Scheinwerfergehäuses (nicht gezeigt) mittels Lehren in einer Lage fixiert werden, in der es von dem Bauteil A den Abstand S hat. Wie bereits erwähnt, kann der Abstand S aufgrund von Montageund/oder Fertigungstoleranzen variieren. Beim Montieren der Befestigungseinrichtung, was nun anhand der Fig. 10 bis 14 beschrieben wird, erfolgt ein automatischer Toleranzausgleich.

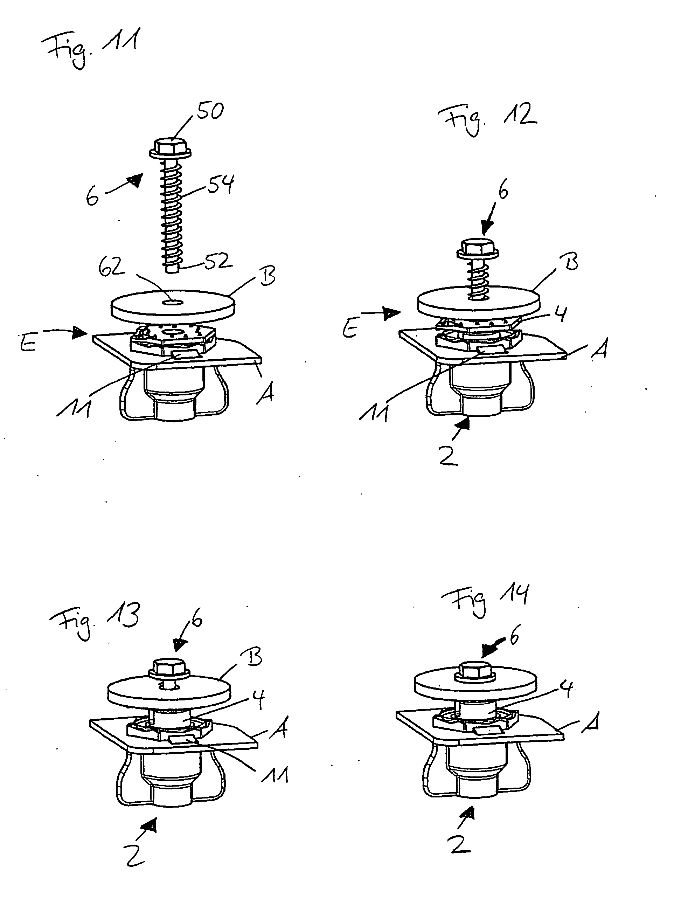

Wie aus den Fig. 11 und 12 hervorgeht, wird zunächst die Schraube 6 durch ein Loch 62 des Bauteils B in die Baueinheit E eingedreht. Aufgrund der Mitschleppverbindung zwischen dem Gewinde 54 der Schraube 6 und den Mitschlepparmen 46 des Verstellelementes 4 wird das Verstellelement 4 mitgedreht. Das Innengewinde 28 des Aufnahmeelementes 2 und das Außengewinde 48 des Verstellelementes 4 bilden eine Gewindeverbindung, die im dargestellten Ausführungsbeispiel linksgängig ist. Das Verstellelement 4 wird daher von der Schraube 6 aus dem Aufnahmeelement 2 herausgeschraubt.

Die Mitschleppverbindung zwischen den Mitschlepparmen 46 und dem Gewinde 54 der Schraube 6 sowie die Rastverbindung zwischen dem Rastvorsprung 20 und den Rastvertiefungen 40 sind so ausgelegt, dass das Lösemoment der Mitschleppverbindung 46, 54 größer ist als das Lösemoment der Rastverbindung 20, 40. Dies wird durch Geometrie und Wahl der Werkstoffe (z.B. einen hohen Glasfaseranteil im Kunststoff des Verstellelementes 4) erreicht. Hierdurch wird sichergestellt, dass beim Mitschleppen des Verstellelementes 4 der Rastvorsprung 20 aus der betreffenden Rastvertiefung 40 rutscht, ohne dass die Mitschleppverbindung zwischen dem Gewinde 54 der Schraube 6 und den Mitschlepparmen 46 des Verstellelementes 4 gelöst wird.

Wenn der Flansch 32 in Anlage mit dem Bauteil B gelangt, werden die Spitzen 36 in das Material des Bauteils B eingedrückt. Das Verstellelement 4 ist auf diese Weise gegen Lösen gesichert. Die Baueinheit 4 überbrückt nun den Abstand S, so dass der selbsttätige Toleranzausgleich erreicht ist.

Beim weiteren Einschrauben der Schraube 6 wird das Lösemoment (Reibmoment) der Mitschleppverbindung 46, 54 überwunden, so dass sich die Schraube 6 relativ zu dem Verstellelement 4 dreht. Hierbei formt das Gewinde 54 der Schraube 6 in der glattwandigen Bohrung 16 des Aufnahmeelementes 2 das Gegengewinde 56, wodurch zwischen der Schraube 6 und dem Aufnahmeelement 2 eine zweite Gewindeverbindung entsteht. Diese zweite Gewindeverbindung hat eine Gangrichtung, die zu derjenigen der Gewindeverbindung 28, 48 entgegengesetzt ist; im vorliegenden Ausführungsbeispiel sind daher das Gewinde 54 der Schraube 6 und das im Aufnahmeelement 2 gebildete Gegengewinde 56 rechtsgängig.

Wenn die Schraube 6 bis zur Anlage des Schraubenkopfes 50 am Bauteil B eingeschraubt ist, ist die Befestigungseinrichtung fertig montiert, s. Fig. 10 und 14. Wie bereits erwähnt, entsteht hierdurch nicht notwendigerweise eine kraftschlüssige Verbindung, da die Bauteile A und B noch an anderen Stellen (nicht gezeigt) geführt sein können. Es versteht sich jedoch, dass die Befestigungseinrichtung je nach Anwendungsfall auch eine kraftschlüssige Verbindung zwischen den Bauteilen A und B herstellen könnte.

Bei dem dargestellten Ausführungsbeispiel haben das Aufnahmeelement 2 und das Verstellelement 4 unrunde Umfangskonturen in Form eines Sechskants, die in den durch die Rastverbindung vorgegebenen Winkelpositionen miteinander fluchten. Bei einer abgewandelten Ausführungsform hat das Verstellelement eine andere Umfangskontur als das Aufnahmeelement, beispielsweise eine kreisrunde Kontur. Hierbei muss allerdings sichergestellt sein, dass die Umfangskontur des Verstellelementes nicht über diejenige des Aufnahmeelementes vorsteht.

Anhand der Figuren 2, 6 und 8 wird eine weitere abgewandelte Ausführungsform der Erfindung näher erläutert. Der Rastvorsprung 20 ist am Verstellelement 4 vorgesehen, während die über den Umfang verteilten Rastvertiefungen 40 am Aufnahmeelement 2 vorgesehen sind. Jede der Rastvertiefungen 40 hat die Form einer stirnseitig am Flansch 10 des Verstellelementes 4 vorgesehenen Kerbe, die auf einer Seite von einer axial verlaufenden Anschlagfläche 68 und auf der anderen Seite von einer Schrägfläche 66 begrenzt wird. Jeweils zwei benachbarte Rastvertiefungen 40 sind durch zwei Rampenflächen. 70, 72 verbunden, die ausgehend von den beiden benachbarten Rastvertiefungen 40 schräg nach unten (in den Figuren 6 und 8) verlaufen und sich in einer Talsohle 74 treffen.

Der Rastvorsprung 20 hat die Form eines Sägezahnes, der auf einer Seite von einer axial verlaufenden Anschlagfläche 78 und auf der anderen Seite von einer Schrägfläche 76 begrenzt wird. Die Anschlagflächen 68, 78 und die Schrägflächen 66, 76 des Rastvorsprunges 20 und der Rastvertiefungen 40 wirken miteinander zusammen, wie noch genauer erläutert wird.

Der Rastvorsprung 20 ist bei dem gezeigten Ausführungsbeispiel an einem dünnen Materialstreifen vorgesehen, der sich aus zwei Armen 80, 82 zusammensetzt.. Wie insbesondere in Figur 2 zu sehen ist, verläuft der Materialstreifen 80, 82 am äußeren Umfang des Flansches 32 des Verstellelementes 4 in Umfangsrichtung und ist dadurch gebildet, dass er von dem übrigen Bereich des Flansches 32 durch eine durchgehende Ausnehmung 22 im Flansch 32 getrennt ist. Somit ist der Materialstreifen 80, 82 lediglich an seinen entgegengesetzten Enden an dem Flansch 32 des Verstellelementes 4 angeformt. Die beiden Arme 80, 82 des Materialstreifens sind geringfügig nach unten (in den Figuren 1 und 8) geneigt und treffen sich in dem Rastvorsprung 20. Aufgrund der beschriebenen Geometrie und des verwendeten Werkstoffes (Kunststoffes) ist der Rastvorsprung 20 axial federnd verformbar, um in der gewünschten Weise mit den Rastvertiefungen 40 zusammenwirken zu können.

Wenn beim Verschrauben des Verstellelementes 4 mit dem Aufnahmeelement 2 der Flansch 32 des Verstellelementes 4 sich dem Flansch 10 des Aufnahmeelementes 2 nähert, gleitet der Rastvorsprung 20 entlang der Rampenfläche 72 einer der Rastvertiefungen 40, bis der Rastvorsprung 20 in die entsprechende Rastvertiefung 40 einschnappt. In dieser Raststellung liegen die axial verlaufenden Anschlagflächen 68, 78 des Verstellelementes 4 und des Aufnahmeelementes 2 aneinander an, so dass eine weitere Drehung des Verstellelementes 4 relativ zu dem Aufnahmeelement 2 verhindert wird. Die Gefahr einer Verkonterung zwischen dem Verstellelement 4 und dem Aufnahmeelement 2 ist somit vermieden.

Eine gegensinnige Drehung des Verstellelementes 4 relativ zu dem Aufnahmeelement 2 wird durch die Schrägflächen 66, 76 ermöglicht. Auch bei dieser Ausführungsform ist das durch die Schrägflächen 66, 76 definierte Lösemoment der Rastverbindung kleiner als das Lösemoment der Mitschleppverbindung. Wenn daher beim Toleranzausgleichvorgang die Schraube in das Verstellelement 4 eingedreht wird, kann die Befestigungsschraube wie bei dem vorhergehenden Ausführungsbeispiel das Verstellelement 4 aus dem Aufnahmeelement 2 herausschrauben, wobei der axial federnd "aufgehängte" Rastvorsprung 20 über die Schrägfläche 66 der betreffenden Rastvertiefung 40 rutscht.

Die Rastverbindung 20, 40 dieser Ausführungsform zeichnet sich daher durch präzise Funktionsweise und hohe Funktionssicherheit aus.

## Patentansprüche

1. Befestigungseinrichtung zum Befestigen eines Bauteils B an einem Bauteil A mit selbsttätigem Ausgleich von Toleranzen im Abstand (S) zwischen dem Bauteil B und dem Bauteil A, bestehend aus
a. einem Aufnahmeelement (2) und einem Verstellelement (4), das über eine erste Gewindepaarung (28, 48) einer ersten Gangrichtung mit dem Aufnahmeelement (2) verschraubbar ist, und
b. einer Befestigungsschraube (6), die über eine zweite Gewindepaarung (54, 56) einer entgegengesetzten zweiten Gangrichtung in das Aufnahmeelement (2) einschraubbar und mit dem Verstellelement (4) durch eine lösbare Mitschleppverbindung (46, 54) verbindbar ist, um beim Drehen der Befestigungsschraube (6) das Verstellelement (4) mitzudrehen und **dadurch** zwecks Toleranzausgleich in Anlage mit dem Bauteil B zu bewegen, **dadurch gekennzeichnet, dass**
c. das Aufnahmeelement (2) unterhalb eines Flansches (10) mindestens einen radial vorstehenden Haltevorsprung (26) aufweist, so dass das Aufnahmeelement (2) durch form- und/oder kraftschlüssiges Halten des Bauteils A zwischen dem Flansch (10) und dem mindestens einen Haltevorsprung (26) am Bauteil A festlegbar ist.

2. Befestigungseinrichtung gemäß Anspruch 1, deren Aufnahmeelement (2) mindestens ein umfänglich versetzt zu dem Haltevorsprung (26) angeordnetes Federelement (11) umfasst, das in Längsrichtung des Aufnahmeelements (2) versetzt zum Haltevorsprung (26) angeordnet ist.

3. Befestigungseinrichtung gemäß Anspruch 2, deren Federelement (11) in radialer Richtung vorsteht und in Längsrichtung des Aufnahmeelements (2) zum Haltevorsprung (26) hin geneigt ist, um bei Installation des Aufnahmeelements (2) im Bauteil A federnd vom Haltevorsprung (26) weg biegbar zu sein.

4. Befestigungseinrichtung gemäß einem der Ansprüche 1 bis 3, deren mindestens ein Haltevorsprung (26) eine Einführschräge an einer dem Flansch (10) zugewandten Seite aufweist, so dass das Bauteil A vereinfacht zwischen Flansch (10) und Haltevorsprung (26) einführbar ist.

5. Befestigungseinrichtung gemäß einem der 2 bis 4, deren Federelement (11) in eine Öffnung oder Vertiefung (93) des Bauteils A einschnappbar ist, so dass ein Drehen des Aufnahmeelements (2) um seine Längsachse verhindert ist.

6. Befestigungseinrichtung gemäß Anspruch 5, deren Federelement (11) in eingeschnappten Zustand entfernbar ist, indem das Aufnahmeelement (2) mit einem Mindestdrehmoment um seine Längsachse gedreht wird.

7. Befestigungseinrichtung gemäß einem der vorhergehenden Ansprüche, dessen Flansch (10) in einer ersten Radialebene des Aufnahmeelements (2) und dessen Haltevorsprung (26) in einer zweiten Radialebene des Aufnahmeelements (2) liegen, die derart voneinander beabstandet sind, dass das Bauteil A zwischen ihnen aufnehmbar ist, vorzugsweise dass sie annähernd um die Dicke des Bauteils A voneinander beabstandet sind.

8. Befestigungseinrichtung gemäß einem der vorhergehenden Ansprüche, dessen Verstellelement (4) beim Verschrauben mit dem Aufnahmeelement (2) in eine als Transport- und Einbaulage dienende Endstellung bewegbar ist, in der das Aufnahmeelement (2) und das Verstellelement (4) durch eine lösbare Rastverbindung (20, 40) in einer von mehreren vorgegebenen Winkelpositionen zueinander gehalten werden.

9. Bauteil A in Kombination mit einem Befestigungselement gemäß einem der vorhergehenden Ansprüche, während das Bauteil A ein Schlüsselloch (90) aufweist, in dem das Aufnahmeelement (2) des Befestigungselements festlegbar ist.

10. Bauteil gemäß Anspruch 9, dessen Schlüsselloch (90) eine Form aufweist, die annähernd komplementär zur Silhouette des Aufnahmeelements (2) innerhalb der zweiten Radialebene ausgebildet ist.

11. Einsetzen und Befestigen einer Befestigungseinrichtung nach einem der Ansprüche 1 bis 8 in einem Schlüsselloch (90) eines Bauteils A, das die folgenden Schritte aufweist:
a) Ausrichten des Schlüssellochs (90) und des Aufnahmeelements (2) zueinander,
b) Einsetzen des Aufnahmeelements (2) in das Schlüsselloch (90),
c) Drehen des Aufnahmeelements (2) um seine Längsachse, so dass das Bauteil A zwischen dem Flansch (10) und dem Haltevorsprung (26) des Aufnahmeelements (2) gehalten wird.

12. Entfernen einer Befestigungseinrichtung nach einem der Ansprüche 1 bis 8, die in einem Schlüsselloch (90) eines Bauteils A befestigt ist, aus dem Schlüsselloch (90), das die folgenden Schritte aufweist:
a) Drehen des Aufnahmeelements (2) um seine Längsachse, wodurch verriegelnde Federelemente (11) entfernt werden,
b) Ausrichten des Aufnaluneelements (2) zum Schlüsselloch (90) und
c) Entfernen des Aufnahmeelements (2) aus dem Schlüsselloch (90).

## Claims

1. Fastening apparatus for fastening a component B to a component A with automatic equalization of tolerances in the separation distance (S) between the component B and the component A, comprising
a. a receiving element (2) and an adjustment element (4), which can be screwed to the receiving element (2) via a first thread pairing (28, 48) of a first thread direction, and
b. a fastening screw (6), which can be screwed into the receiving element (2) via a second thread pairing (54, 56) of an opposite thread direction and can be connected with the adjustment element (4) via a detachable drag connection (46, 54), in order to turn the adjustment element (4) when the fastening screw (6) is turned and to thereby move for the purpose of tolerance equalization in line with component B, **characterized in that**
c. the receiving element (2) below a flange (10) has at least one radially projecting holding projection (26) so that the receiving element (2) can be immobilized through positive and/or frictional holding of the component A between the flange (10) and the at least one holding projection (26) on the component A.

2. Fastening apparatus according to claim 1, the receiving element (2) of which comprises at least one spring element (11) arranged offset circumferentially with respect to the holding projection (26), which is arranged offset with respect to the holding projection (26) in the longitudinal direction of the receiving element (2).

3. Fastening apparatus according to claim 2, the spring element (11) of which protrudes in the radial direction and is tilted towards the holding projection (26) in the longitudinal direction of the receiving element (2), in order to be able to be bent away resiliently from the holding projection (26) during installation of the receiving element (2) in component A.

4. Fastening apparatus according to any of the claims 1 to 3, the at least one holding projection (26) of which has an insertion bevel on a side facing the flange (10) so that the component A can be inserted in a simplified manner between flange (10) and holding projection (26).

5. Fastening apparatus according to any of the claims 2 to 4, the spring element (11) of which can be snapped into an opening or recess (93) in component A so that a turning of the receiving element (2) around its longitudinal axis is prevented.

6. Fastening apparatus according to claim 5, the spring element (11) of which can be removed in a snapped-in state in that the receiving element (2) is turned with a minimum torque on its longitudinal axis.

7. Fastening apparatus according to any of the preceding claims, the flange (10) of which lies in a first radial plane of the receiving element (2) and the holding projection (26) of which lies in a second radial plane of the receiving element (2), which are separated from each other such that component A can be picked up between them, preferably that they are separated from each other approximately by the thickness of the component A.

8. Fastening apparatus according to any of the preceding claims, the adjustment element (4) of which when screwed to the receiving element (2) can be moved to an end position serving as transport and installation position, in which the receiving element (2) and the adjustment element (4) are held together in one of several predetermined angle positions via a detachable latch connection (20, 40).

9. Component A in combination with a fastening element according to any of the preceding claims, while component A has a keyhole (90), in which the receiving element (2) of the fastening element can be immobilized.

10. Component according to claim 9, the keyhole (90) of which has a form, which is designed almost complementary to the silhouette of the receiving element (2) within the second radial plane.

11. Insertion and fastening of a fastening apparatus according to any of the claims 1 to 8 into a keyhole (90) of a component A, comprising the steps of:
a. alignment of the keyhole (90) and the receiving element (2) with each other,
b. insertion of the receiving element (2) into the keyhole (90),
c. turning of the receiving element (2) on its longitudinal axis so that the component A is held between the flange (10) and the holding projection (26) of the receiving element (2).

12. Removal of a fastening apparatus according to any of the claims 1 to 8 that is fastened in a keyhole (90) of a component A from the keyhole (90), comprising the steps of:
a. turning of the receiving element (2) on its longitudinal axis, wherein locked spring elements (11) are removed,
b. alignment of the receiving element (2) with the keyhole (90) and
c. removal of the receiving element (2) from the keyhole (90).

## Revendications

1. Dispositif de fixation pour fixer une pièce B sur une pièce A doté d'une égalisation automatise de tolérances à distance (S) entre la pièce B et la pièce A, comprenant
a. un élément de logement (2) et un élément d'ajustage (4) qui peut être vissé par un premier appariement fileté (28, 48) d'une première direction de pas à l'élément de logement (2), et
b. une vis de fixation (6) qui peut être serrée par un second appariement fileté (54, 56) d'une seconde direction de pas opposée dans l'élément de logement (2) et peut être reliée à l'élément d'ajustage (4) par une liaison d'accouplement amovible (46, 54), pour entraîner en rotation l'élément d'ajustage (4) lors de la rotation de la vis de fixation (6), et le déplacer ainsi à des fins d'égalisation de tolérance en appui avec la pièce B, **caractérisé en ce que**
c. l'élément de logement (2) présente en dessous d'une bride (10) au moins un épaulement de blocage dépassant radialement (26), de telle sorte que l'élément de logement (2) peut être fixé par blocage par complémentarité de forme et/ou de force de la pièce A entre la bride (10) et ledit au moins un épaulement de blocage (26) sur la pièce A.

2. Dispositif de fixation selon la revendication 1, dont l'élément de logement (2) comprend au moins un élément de ressort (11) agencé sur la périphérie de manière décalée par rapport à l'épaulement de blocage (26), lequel élément de ressort est agencé dans le sens longitudinal de l'élément de logement (2) de manière décalée par rapport à l'épaulement de blocage (26).

3. Dispositif de fixation selon la revendication 2, dont l'élément de ressort (11) dépasse en direction radiale et est incliné dans le sens longitudinal de l'élément de logement (2) par rapport à l'épaulement de blocage (26), pour être flexible lors de l'installation de l'élément de logement (2) dans la pièce A de manière élastique dans la direction opposée à l'épaulement de blocage (26).

4. Dispositif de fixation selon une des revendications 1 à 3, dont au moins un épaulement de blocage (26) présente un biseau d'introduction sur une face dirigée vers la bride (10), de telle sorte que la pièce A peut être introduite aisément entre la bride (10) et l'épaulement de blocage (26).

5. Dispositif de fixation selon une des revendications 2 à 4, dont l'élément de ressort (11) peut être encliqueté dans une ouverture ou cavité (93) de la pièce A, de telle sorte qu'une rotation de l'élément de logement (2) autour de son axe longitudinal est bloquée.

6. Dispositif de fixation selon la revendication 5, dont l'élément de ressort (11) peut être retiré à l'état encliqueté en tournant l'élément de logement (2) avec un couple minimal autour de son axe longitudinal.

7. Dispositif de fixation selon une des revendications précédentes, dont la bride (10) repose dans un premier plan radial de l'élément de logement (2) et dont l'épaulement de blocage (26) repose dans un second plan radial de l'élément de logement (2), lesquels sont espacés l'un de l'autre de manière à ce que la pièce A puisse être logée entre eux, de préférence de manière à ce qu'ils soient espacés l'un de l'autre approximativement selon une épaisseur de la pièce A.

8. Dispositif de fixation selon une des revendications précédentes, dont élément d'ajustage (4) est mobile lors du vissage à l'élément de logement (2) dans une position finale servant de position de transport et de montage, dans laquelle l'élément de logement (2) et l'élément d'ajustage (4) sont maintenus entre eux par une liaison encliquetable détachable (20, 40) dans une des plusieurs positions angulaires définies.

9. Pièce A en combinaison avec un élément de fixation selon une des revendications précédentes, tandis que la pièce A présente une encoche de clavette (90) dans laquelle peut être fixé l'élément de logement (2) de l'élément de fixation.

10. Pièce selon la revendication 9, dont l'encoche de clavette (90) présente une forme qui est conçue de manière approximativement complémentaire à la silhouette de l'élément de logement (2) à l'intérieur du second plan radial.

11. Pose et fixation d'un dispositif de fixation selon une des revendications 1 à 8 dans une encoche de clavette (90) d'une pièce A, comprenant les étapes suivantes :
a) Alignement de l'encoche de clavette (90) et de l'élément de logement (2),
b) Pose de l'élément de logement (2) dans l'encoche de clavette (90),
c) Rotation de l'élément de logement (2) autour de son axe longitudinal, de telle sorte que la pièce A est maintenue entre la bride (10) et l'épaulement de blocage (26) de l'élément de logement (2).

12. Retrait d'un dispositif de fixation selon une des revendications 1 à 8, qui est fixé dans une encoche de clavette (90) d'une pièce A, hors d'une encoche de clavette (90), comprenant les étapes suivantes :
a) Rotation de l'élément de logement (2) autour de son axe longitudinal permettant de retirer les éléments de ressort à verrouillage (11),
b) Alignement de l'élément de logement (2) par rapport à l'encoche de clavette (90) et
c) Retrait de l'élément de logement (2) hors de l'encoche de clavette (90).
